Europäisches Patentamt

European Patent Office

Office européen des brevets

(11) Numéro de publication: **0 091 868**
**B1**

## FASCICULE DE BREVET EUROPEEN

(45) Date de publication du fascicule du brevet:
**18.12.85**

(51) Int. Cl.⁴: **H 04 N 5/14**

(21) Numéro de dépôt: **83400703.1**

(22) Date de dépôt: **06.04.83**

(54) Circuit d'amélioration du contraste d'un détail d'une image vidéo.

(30) Priorité: **09.04.82 FR 8206270**

(43) Date de publication de la demande:
**19.10.83 Bulletin 83/42**

(45) Mention de la délivrance du brevet:
**18.12.85 Bulletin 85/51**

(84) Etats contractants désignés:
**DE GB**

(56) Documents cités:
**FR - A - 1 481 969**
**FR - A - 2 406 922**
**US - A - 3 257 506**

(73) Titulaire: **THOMSON-CSF, 173, Boulevard Haussmann, F-75379 Paris Cedex 08 (FR)**

(72) Inventeur: **Lepage, Claude, THOMSON-CSF SCPI 173, bld Haussmann, F-75379 Paris Cedex 08 (FR)**
Inventeur: **Voisin, Gérard, THOMSON-CSF SCPI 173, bld Haussmann, F-75379 Paris Cedex 08 (FR)**

(74) Mandataire: **Trocellier, Roger et al, THOMSON-CSF SCPI 173, Bid Haussmann, F-75379 Paris Cedex 08 (FR)**

## Description

La présente invention concerne les circuits de traitement de signal vidéo, placés dans une caméra ou un moniteur de télévision pour modifier les caractéristiques du signal vidéo, et elle concerne plus précisément les circuits tendant à modifier le contraste de tout ou partie de l'image produite sur l'écran d'un moniteur (cf. FR-A-1481969).

Parmi les circuits connus, on trouve des circuits de réglage de contraste qui compriment ou dilatent l'amplitude du signal vidéo pour diminuer ou augmenter le contraste entre les points les plus sombres (niveau inférieur du signal vidéo) et les points les plus clairs (niveau supérieur du signal) de l'image. Le réglage du contraste se fait par action manuelle sur un potentiomètre.

On trouve aussi des circuits dits «d'expansion automatique de contraste» qui recherchent le niveau le plus bas et le niveau le plus haut du signal vidéo sur toute la durée d'une trame, et étirent en hauteur le signal de manière que le niveau le plus bas se retrouve à un potentiel correspondant à l'affichage d'un point de luminance minimale («noir») sur l'écran, tandis que le niveau le plus haut du signal se retrouve à un autre potentiel correspondant à l'affichage d'un point de luminance maximale («blanc»), ces deux potentiels extrêmes étant d'ailleurs éventuellement réglables manuellement. Les amplitudes intermédiaires de signal correspondent à toute l'échelle des gris entre le «noir» et le «blanc».

On trouve encore des circuits dits «de correction de contours» qui améliorent l'aspect contrasté de l'image de la manière suivante: chaque fois que le signal vidéo présente un point de transition relativement raide entre un premier niveau de luminance et un deuxième niveau, la différence entre ces deux niveaux est artificiellement accrue par une suroscillation du signal de part et d'autre du front de transition, ce qui se traduit sur l'écran par une augmentation ponctuelle du contraste entre points adjacents. Comme son nom l'indique, cette correction améliore la lisibilité de l'image en surlignant les contours des formes visibles sur l'écran.

Enfin, il existe des circuits dits de «correction de gamma» qui, théoriquement utilisés pour compenser la non-linéarité de la courbe de réponse du tube cathodique (luminance en fonction de la tension de modulation), sont quelquefois utilisés pour faire ressortir, par un relèvement renforcé des faibles niveaux de signal, le contraste des zones sombres d'une image présentant à la fois des zones claires et des zones sombres.

L'existence de ces divers types de circuits de traitement, qui sont souvent utilisés simultanément, montre qu'il existe un besoin important d'améliorer la lisibilité d'une image reproduite sur un écran de visualisation.

Ce besoin se fait particulièrement sentir dans le domaine militaire, lorsqu'une caméra de télévision (noir et blanc) est incorporée à un système de conduite de tir pour permettre l'observation d'un paysage, la recherche d'une cible, et le pointage d'une arme sur cette cible. Par exemple, si la cible est un char, éventuellement camouflé, se déplaçant sur un fond de paysage sombre, on aura du mal à le repérer correctement et surtout à reconnaître s'il s'agit d'un char ami ou ennemi. Les circuits d'amélioration de contraste exposés ci-dessus aident à cette reconnaissance mais ne suffisent pas encore.

La présente invention propose un nouveau circuit de traitement, établissant un contraste d'image tel que même dans les pires conditions, et notamment lorsque l'image présente un fort contre-jour, toute partie intéressante de l'image, aussi bien dans les zones sombres que dans les zones très claires, puisse être reproduite avec une lisibilité excellente.

Pour parvenir à ce résultat, la présente invention propose un circuit de traitement de signal vidéo comportant un circuit d'expansion automatique de contraste recevant le signal vidéo et ayant pour fonction de l'étirer en amplitude en l'alignant entre une référence inférieure de tension et une référence supérieure de tension prédéterminées, un générateur de fenêtre produisant un signal de fenêtre, un circuit de commutation commandé par le générateur de fenêtre pour diriger vers la sortie du circuit de traitement, d'une part, le signal vidéo traité par le circuit d'expansion pendant des intervalles de temps correspondant à la fenêtre et, d'autre part, ledit signal vidéo pendant les intervalles de temps restants de l'image, c'est-à-dire en dehors de la fenêtre, caractérisé par le fait que le circuit d'expansion est également commandé par le générateur de fenêtre pour aligner à la référence inférieure de tension le point le plus sombre de la fenêtre et à la référence supérieure de tension le point le plus clair de la fenêtre, et qu'il comporte un circuit complémentaire d'expansion automatique de contraste recevant ledit signal vidéo, ayant la même fonction que le premier mais relativement à la totalité de l'image, ledit circuit de commutation dirigeant vers ladite sortie du circuit de traitement le signal vidéo traité par ledit circuit complémentaire pendant lesdits intervalles de temps en dehors de la fenêtre.

Ainsi, non seulement l'image globale sur l'écran est convenablement contrastée, mais une portion de cette image subit une optimisation de contraste indépendante du contraste du reste de l'image, c'est-à-dire que si cette portion d'image est une zone sombre d'une image à contre-jour, cette zone apparaîtra à l'écran avec un contraste maximal allant du blanc au noir.

Les références de tension des deux circuits d'expansion peuvent être les mêmes ou non; en particulier elles peuvent être réglables individuellement par des potentiomètres.

La fenêtre est de préférence réglable aussi bien en largeur qu'en hauteur et en position: dans un système de conduite de tir, elle peut être asservie à la position et à la dimension d'un réticule de pointage visible sur l'écran et réalisé par incrustation dans le signal vidéo de créneaux de largeur, de position et de luminance choisies.

L'invention permet d'éviter notamment que l'observateur intéressé par une portion d'image mal contrastée soit obligé de régler manuellement le contraste en fonction de cette portion: d'une part il serait amené à modifier constamment ce réglage, et d'autre part le contraste en dehors de la portion intéressante serait très mauvais. Ce dernier inconvénient serait d'ailleurs conservé si on remplaçait le réglage manuel par une expansion de contraste automatique faite en fonction du niveau de signal à l'intérieur d'une fenêtre délimitant la portion d'image intéressante.

D'autres caractéristiques et avantages de l'invention apparaîtront à la lecture de la description détaillée qui suit et qui est faite en référence aux dessins annexés dans lesquels:

— les fig. 1a, 1b, 1c montrent ce que devient un signal vidéo lors d'une expansion de contraste;

— la fig. 2 montre un signal vidéo présentant un fort contraste global;

— la fig. 3 montre le signal vidéo correspondant à la fig. 2, traité par le circuit de l'invention;

— la fig. 4 montre l'allure d'une image après traitement du signal vidéo selon l'invention;

— la fig. 5 montre un schéma bloc du circuit de traitement selon l'invention;

— la fig. 6 montre un exemple de schéma de réalisation simplifié de circuit d'expansion de contraste utilisable dans l'invention.

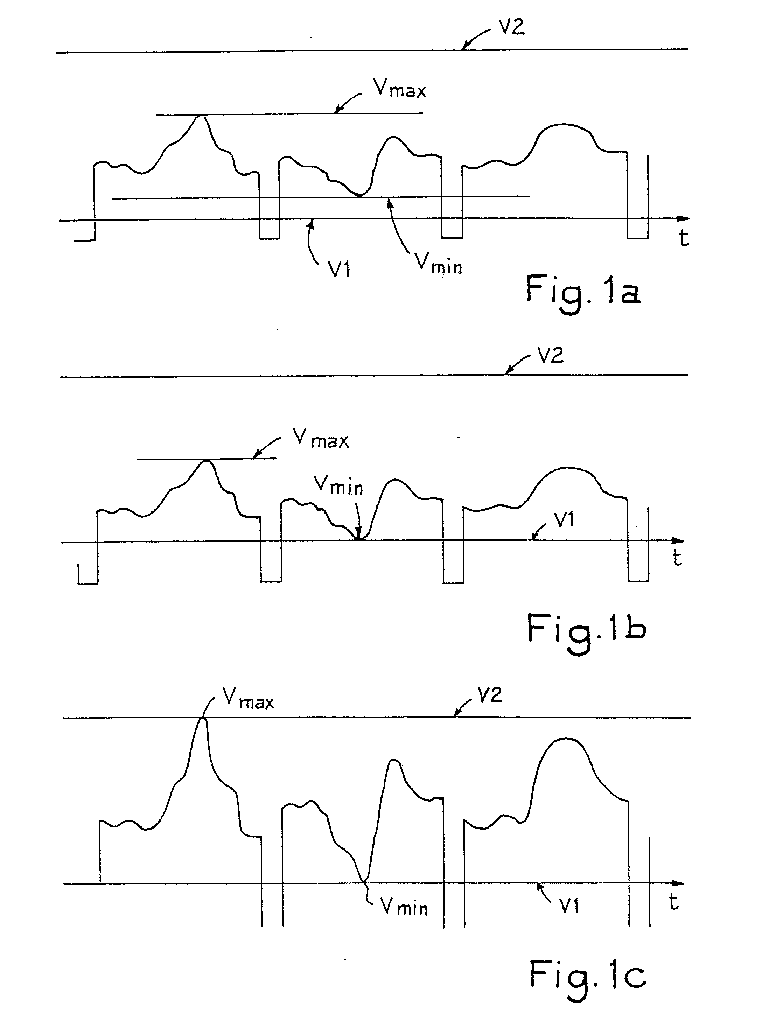

La figure 1a montre un signal vidéo se présentant sous forme de portions successives de signal correspondant chacune à une ligne, séparées les unes des autres par des intervalles de retour de ligne. Trois lignes successives seulement ont été représentées, mais si l'on examine le signal sur toute une image, c'est-à-dire par exemple sur toute une trame de 625 lignes, on peut repérer un niveau de signal minimal Vmin et un niveau de signal maximal Vmax.

Appliqué tel quel à l'entrée de modulation de luminance de l'écran de visualisation (wehnelt d'un tube cathodique par exemple), ce signal engendrerait une image dont la luminosité varie entre un niveau de gris clair correspondant à Vmax et un niveau de gris plus foncé correspondant à Vmin.

Un circuit d'expansion automatique de contraste aura pour fonction d'étirer en hauteur le signal de telle sorte que le niveau Vmin devient égal à une référence de tension inférieure V1 et le niveau Vmax devient égal à une référence de tension supérieure V2, où V2 correspond à du «blanc» (luminosité maximale) et V1 à du «noir» (luminosité minimale). V1 et V2 peuvent être réglables manuellement pour définir ce qu'on appelle blanc et noir, mais, une fois ce réglage opéré, le signal vidéo s'ajustera automatiquement de manière à occuper toute la plage de luminosités intermédiaires entre ces deux niveaux.

Cet étirement peut se décomposer en deux actions: la première consiste (fig. 1b) à décaler globalement le niveau du signal vidéo pour amener Vmin à V1 (ou Vmax à V2); la deuxième consiste (fig. 1c) à amplifier le signal vidéo dans son ensemble de manière à amener Vmax à V2 (ou Vmin à V1), sans modifier le niveau de Vmin (ou Vmax). Ces deux actions sont en réalité simultanées et s'effectuent d'ailleurs avec une certaine constante de temps, c'est-à-dire qu'on repère sur au moins une trame complète les niveaux Vmin et Vmax du signal, et c'est sur le signal vidéo des trames suivantes qu'on effectue le décalage et l'amplification désirés.

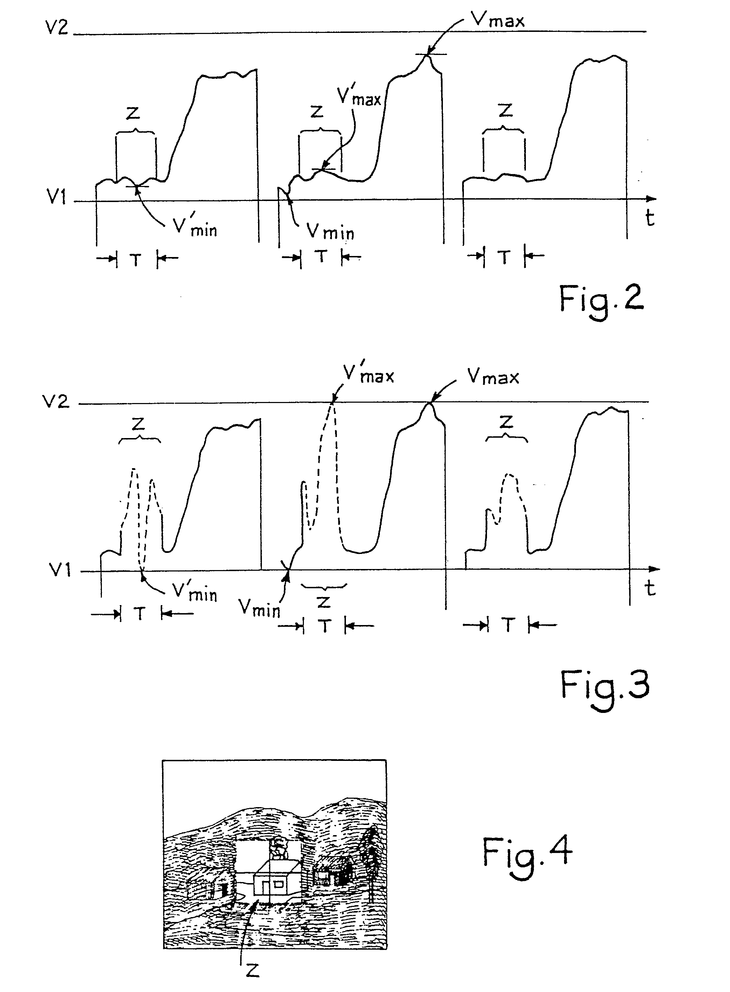

La fig. 2 montre un signal vidéo à fort contraste: dans la première partie de chaque ligne, le signal correspond à une zone sombre peu contrastée, et dans la deuxième partie il correspond à une zone claire, également peu contrastée.

Les niveaux Vmin et Vmax du signal peuvent être amenés à V1 et V2 comme expliqué ci-dessus, mais cela augmentera fort peu le contraste d'une zone Z qui intéresse l'opérateur mais dont les détails sont malheureusement peu visibles du fait que le signal vidéo dans cette zone est peu modulé (par rapport à la modulation globale du signal dans toute l'image). Par exemple le signal oscille dans la zone Z entre deux niveaux proches V'min et V'max.

La fig. 3 montre comment le circuit de traitement selon l'invention va transformer le signal vidéo de la fig. 2: en dehors de la zone intéressante Z, représentée par une fenêtre F s'étendant sur une durée T à chaque ligne, toujours à la même place par rapport au début de la ligne, et ceci sur un certain nombre de lignes, toujours les mêmes à chaque trame, le signal vidéo subit une expansion de contraste comme expliqué aux fig. 1a à 1c; le niveau minimal sur au moins une trame est repéré (Vmin) et amené à V1; le niveau maximal (Vmax) est amené à V2.

Le même travail est exécuté dans la zone Z prise isolément; le niveau minimal du signal sur une trame, en ne considérant que la partie de signal comprise dans la fenêtre correspondant à la zone Z, est repéré (V'min), ainsi que le niveau maximal (V'max). V'min est amené à V1 et V'max à V2; il peut d'ailleurs s'agir de tensions de référence V'1 et V'2 différentes de V1 et V2 et réglables chacune indépendamment de V1 et V2.

L'image dans la zone Z devient ainsi fortement contrastée comme le montrent les oscillations de grande amplitude du signal vidéo dans la zone Z après traitement (fig. 3), et ceci sans altérer le contraste normal du reste de l'image.

La fig. 4 montre l'image que cela peut donner sur un écran de visualisation: la zone Z correspondant à un certain nombre de lignes de balayage et une certaine longueur de ligne apparaît claire et bien contrastée sur un fond généralement sombre dû au contrejour. Si la zone Z était prise dans une partie très claire et peu contrastée de l'image, elle apparaîtrait au contraire globalement plus sombre et bien contrastée.

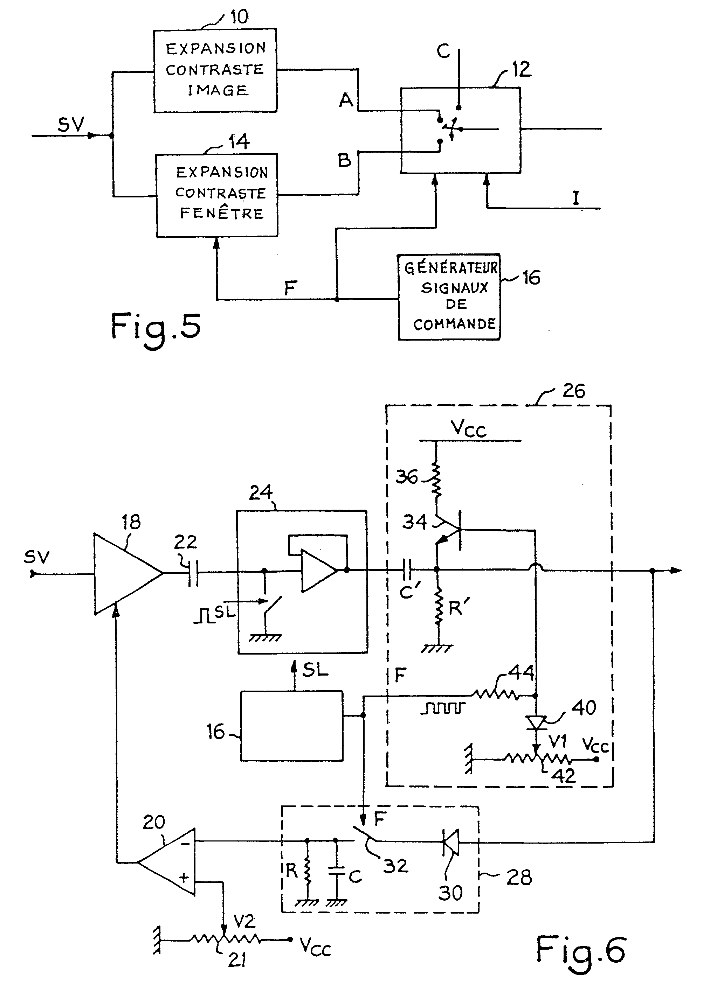

La fig. 5 montre le schéma bloc du circuit de traitement selon l'invention: le signal vidéo SV, non traité ou ayant subi certains traitements préalables, y compris des traitements d'amélioration de contraste tels qu'une correction de contours ou une correction de gamma, est amené à l'entrée d'un premier circuit d'expansion automatique de contraste 10 agissant sur la totalité de l'image, circuit dont la sortie est reliée à une première entrée A d'un circuit de commutation 12.

Par ailleurs, le signal SV est amené à l'entrée d'un deuxième circuit d'expansion automatique de contraste 14 dont la sortie est reliée à une autre borne d'entrée B du circuit de commutation 12.

Le deuxième circuit, à la différence du premier, n'agit que sur une petite partie du signal vidéo, délimitée par la fenêtre F. Un générateur 16 de fenêtre (créneaux d'une durée T pendant N lignes) est donc prévu pour commander le deuxième circuit 14. Ce générateur commande également le circuit de commutation 12 pour diriger vers la sortie de ce dernier soit le signal présent sur sa première entrée A (en dehors de la fenêtre) soit le signal présent sur sa deuxième entrée B (pendant la fenêtre).

Ce schéma de base peut subir des variantes mineures sans sortie du cadre de l'invention.

Par exemple, l'entrée du deuxième circuit 14 peut recevoir non pas le signal vidéo SV mais un signal vidéo ayant subi un traitement dans le premier circuit d'expansion 10.

Un circuit de correction de contours et/ou de correction de gamma peut être placé en amont ou en aval de l'ensemble du circuit de la fig. 5; de tels circuits peuvent aussi être placés en amont ou en aval du deuxième circuit 14 exclusivement, ou encore un circuit de correction de contours en amont ou en aval du deuxième circuit exclusivement et un circuit de correction de gamma en amont ou en aval du premier circuit. Ces solutions sont des variantes mineures possibles parmi d'autres.

Par ailleurs, il faut considérer que le signal vidéo SV qui rentre dans le circuit de traitement peut être pourvu ou non de zones de suppression de signal, de signaux de synchronisation, de signaux particuliers incrustés qui viennent se superposer à l'image (tels qu'un réticule de pointage, ou des indications alphanumériques ou autres symboles). Dans ces conditions, il faut comprendre que des circuits d'incrustation peuvent être prévus en aval de l'un ou l'autre des circuits d'expansion de contraste 10 et 14 ou en aval du circuit de commutation 12, la meilleure solution étant sans doute d'effectuer ces incrustations au niveau du circuit de commutation 12 qui possédera alors des entrées correspondant aux signaux à incruster (figurées symboliquement par une entrée C), et des entrées de commande d'incrustation (figurées symboliquement par une entrée I). Des générateurs de symboles seront reliés aux entrées de signaux à incruster, tandis qu'un circuit de commande d'incrustation (pouvant inclure en pratique le générateur de fenêtre F) commandera à des instants choisis l'aiguillage de tel ou tel signal vers la sortie du circuit de commutation 12.

Ces particularités d'organisation étant données, on va donner en référence à la fig. 6 un exemple de circuit d'expansion de contraste pouvant servir aussi bien comme premier circuit 10 que comme deuxième circuit 14.

Ce circuit comprend un amplificateur à gain variable 18 recevant le signal vidéo à traiter (SV). Le gain est commandé par la sortie d'un amplificateur différentiel 20.

La sortie de l'amplificateur à gain variable 18 est amenée, par l'intermédiaire d'une capacité de liaison 22 et d'un circuit de blocage de niveau («clamping» en anglais) 24, à un circuit d'alignement au niveau inférieur V1, représenté dans un cadre pointillé, désigné par 26. Le circuit 24 a pour fonction de ramener à zéro le niveau de blocage du signal vidéo pendant les retours de ligne.

La sortie du circuit d'alignement 26, qui constitue aussi la sortie du circuit d'expansion de contraste de la fig. 6 est rebouclée sur une entrée de commande de gain de l'amplificateur 18 par l'intermédiaire d'un détecteur de crête de signal vidéo représenté dans un cadre pointillé 28 et par l'intermédiaire de l'amplificateur différentiel 20 dont une entrée est reliée au détecteur de crête et l'autre entrée au curseur d'un potentiomètre 21 définissant la tension de référence supérieure V2 (ajustable).

Le détecteur de crête 28 et le circuit d'alignement 26 reçoivent le signal définissant la fenêtre F pour n'effectuer un travail de détection de crête ou d'alignement de niveau que pendant les créneaux constituant cette fenêtre. Le générateur de fenêtre 16, représenté sur la fig. 6, peut d'ailleurs établir d'autres signaux périodiques que la fenêtre, comme par exemple un signal de synchronisation de ligne SL pour actionner pendant les instants de retour de ligne le dispositif de blocage de niveau 24 (figuré sous forme d'un interrupteur de mise à zéro) commandé par le signal SL et d'un amplificateur suiveur à haute impédance d'entrée.

Le détecteur de crête est par exemple simplement constitué par une diode de redressement 30 en série avec un interrupteur 32 fermé seulement pendant les créneaux de la fenêtre F, et avec un ensemble d'une résistance R et d'une capacité C en parallèle. La capacité se charge sur les pointes de signal vidéo et se décharge avec une constante de temps RC correspondant à environ une trame de balayage.

Le niveau de charge de la capacité C est appliqué à l'amplificateur différentiel 20 qui compare ce niveau à V2 et agit sur le gain de l'amplificateur 18 pour qu'à la trame suivante le signal vidéo soit amplifié ou réduit dans un sens tendant à rapprocher de V2 le niveau de charge de la capacité.

Le circuit 26 d'alignement de niveau inférieur du signal vidéo est constitué de la manière suivante: un condensateur C' reçoit sur une armature le signal à aligner et est connecté par l'autre armature à une résistance R' qui est la résistance d'émetteur d'un transistor 34 polarisé par ailleurs par une résistance de collecteur 36 reliée à une tension Vcc. La base du transistor est aussi reliée par une diode 40 au curseur d'un potentiomètre 42 définissant la valeur de référence inférieure de tension V1. Enfin, la base du transistor est reliée par une résistance 44 à la sortie du générateur de fenêtre 16.

La sortie du circuit d'alignement 26, qui est la sortie du circuit d'expansion de contraste, est prise sur l'émetteur du transistor 34 (relié à la capacité C' et à la résistance R').

En dehors des créneaux définissant la fenêtre F, le transistor 34 est bloqué et le signal vidéo est transmis tel quel de l'entrée à la sortie du circuit d'alignement 26. Pendant les créneaux de la fenêtre F, le transistor peut conduire, mais seulement si le signal vidéo est inférieur à la référence V1, et, dans ce dernier cas, la conduction du transistor provoque une charge du condensateur C'.

La décharge du condensateur étant lente (constante de temps R'C' de l'ordre d'au moins une période de trame), le condensateur prend une valeur de charge moyenne telle que le signal présent sur l'émetteur du transistor soit toujours juste supérieur à V1.

Le circuit 26 effectue donc bien l'alignement sur V1 de la tension minimale de la portion de signal vidéo comprise dans la fenêtre F.

Le circuit de la fig. 6 constitue le circuit 14 de la fig. 5. Il peut constituer aussi le circuit 10 d'expansion sur toute l'image, pourvu qu'on commande le circuit 26 et le circuit 28 non pas par les créneaux de la fenêtre F mais par des créneaux d'une fenêtre F' qui correspond à l'ensemble de l'image.

Cette commande par la fenêtre F' est évidemment nécessaire pour que les périodes de retour de ligne ou trame du signal vidéo ne soient pas prises en compte pour l'expansion de l'image car le niveau de signal vidéo pendant ces retours est indépendant de l'image à observer.

Bien entendu, le même générateur 16 peut servir à engendrer la fenêtre F, la fenêtre F', les signaux de synchronisation SL et d'autres signaux utiles s'il y a lieu.

Le générateur de fenêtre 16 peut être commandé par un microprocesseur qui commande aussi des générateurs de symboles, de réticules, etc., en vue de l'incrustation de signaux appropriés dans le signal vidéo au niveau du circuit de commutation 12 de la fig. 5 en dehors de la fenêtre ou pendant la fenêtre. Ce microprocesseur aura, parmi ses fonctions, la tâche de définir les caractéristiques éventuellement variables de la fenêtre: largeur, hauteur, position, en particulier si ces caractéristiques sont directement liées aux caractéristiques correspondantes d'un réticule de pointage qui lui-même dépend de données extérieures (fournies au microprocesseur) telles que notamment la distance d'une cible.

Le circuit de commutation 12 est, quant à lui, un simple circuit d'aiguillage comprenant des portes analogiques qui laissent passer vers la sortie du circuit le signal appliqué sur telle ou telle de ses entrées, en fonction de créneaux de commande appropriés.

L'invention a été décrite en prenant comme exemple le traitement d'un signal vidéo correspondant à un balayage ligne par ligne (type télévision), mais il est entendu qu'elle ne doit pas se limiter à ce type de balayage.

## Revendications

1. Circuit de traitement de signal vidéo comportant un circuit d'expansion automatique de contraste (14) recevant le signal vidéo et ayant pour fonction de l'étirer en amplitude en l'alignant entre une référence inférieure de tension et une référence supérieure de tension prédéterminées, un générateur de fenêtre (16) produisant un signal de fenêtre (F), un circuit de commutation (12) commandé par le générateur de fenêtre (16) pour diriger vers la sortie du circuit de traitement, d'une part le signal vidéo traité par le circuit d'expansion pendant des intervalles de temps correspondant à la fenêtre, et d'autre part ledit signal vidéo pendant les intervalles de temps restants de l'image, c'est-à-dire en dehors de la fenêtre, caractérisé par le fait que le circuit d'expansion (14) est également commandé par le générateur de fenêtre pour aligner à la référence inférieure de tension le point le plus sombre de la fenêtre et à la référence supérieure de tension le point le plus clair de la fenêtre, et qu'il comporte un circuit complémentaire d'expansion automatique de contraste (10) recevant ledit signal vidéo, ayant la même fonction que le premier mais relativement à la totalité de l'image, ledit circuit de commutation dirigeant vers ladite sortie dudit circuit de traitement le signal vidéo traité par ledit circuit complémentaire pendant lesdits intervalles de temps en dehors de la fenêtre.

2. Circuit selon la revendication 1, caractérisé par le fait que chaque circuit d'expansion comprend un amplificateur à gain variable (18) recevant le signal vidéo (SV), et un circuit (26) d'alignement au niveau inférieur de tension (VI) en aval de l'amplificateur à gain variable, avec une boucle de réaction recevant la sortie du circuit d'alignement pour commander le gain de l'amplificateur à gain variable, cette boucle comprenant un détecteur de crête de signal vidéo (28) suivi d'un amplificateur différentiel (20) dont une entrée est à une référence supérieure de tension (V2).

3. Circuit selon la revendication 2, caractérisé par le fait que le circuit d'alignement au niveau inférieur (26) et le détecteur de crête (28) du circuit d'expansion de contraste (14) sont commandés pour ne fonctionner que sur les niveaux de signal vidéo présents pendant la fenêtre.

4. Circuit selon l'une quelconque des revendications 1 à 3, caractérisé par le fait que le générateur de fenêtre est apte à produire une fenêtre de dimensions et positions variables.

5. Circuit selon l'une quelconque des revendications 1 à 4, caractérisé par le fait que les références de tension inférieure et supérieure (V1, V2) sont réglables individuellement pour les deux circuits d'expansion (10 et 14).

6. Circuit selon l'une quelconque des revendications 1 à 5, caractérisé par le fait que le circuit de commutation (12) comporte des entrées d'incrustation et/ou de suppression de signal et est apte à aiguiller vers sa sortie soit le signal vidéo traité par le circuit d'expansion complémentaire (10) (en dehors de la fenêtre), soit le signal vidéo traité par le circuit d'expansion (14) (pendant la fenêtre), soit des signaux d'incrustation ou de suppression (en dehors de/ou pendant la fenêtre).

7. Circuit selon la revendication 1, caractérisé par le fait que ledit circuit d'expansion de contraste (14) reçoit le signal vidéo après son passage dans le circuit d'expansion complémentaire (10).

## Patentansprüche

1. Videosignal-Verarbeitungsschaltung, mit einer Schaltung zur automatischen Kontrastdehnung (14), welche das Videosignal empfängt und die Aufgabe hat, seine Amplitude zu dehnen und es zwischen vorbestimmten unteren und oberen Referenzspannungen auszurichten, mit einem Fenstergenerator (16), der ein Fenstersignal (F) erzeugt, einem Schaltkreis (12), der durch den Fenstergenerator (16) gesteuert wird, um zum Ausgang der Verarbeitungsschaltung einerseits das durch die Dehnungsschaltung während der dem Fenster entsprechenden Zeitintervalle bearbeitete Videosignal und andererseits das Videosignal während der verbleibenden Zeitintervalle des Bildes, also ausserhalb des Fensters, zu führen, dadurch gekennzeichnet, dass die Dehnungsschaltung (14) ebenfalls durch den Fenstergenerator gesteuert wird, um den dunkelsten Punkt des Fensters nach der unteren Spannungsreferenz und den hellsten Punkt des Fensters nach der oberen Spannungsreferenz auszurichten, und dass sie eine komplementäre Schaltung zur automatischen Kontrastdehnung (10) umfasst, welche das genannte Videosignal empfängt und die gleiche Funktion wie die erste besitzt, jedoch die Gesamtheit des Bildes betreffend, wobei der Schaltkreis das durch die komplementäre Schaltung bearbeitete Videosignal während der genannten, ausserhalb des Fensters liegenden Zeitintervalle zu dem genannten Ausgang der genannten Verarbeitungsschaltung lenkt.

2. Schaltung nach Anspruch 1, dadurch gekennzeichnet, dass jede Dehnungsschaltung einen Verstärker mit veränderlicher Verstärkung (18) umfasst, der das Videosignal (SV) empfängt, und eine Schaltung (26) zur Ausrichtung auf den unteren Spannungspegel (VI) hinter dem Verstärker mit variabler Verstärkung umfasst, mit einer Rückkopplungsschleife, welche das Ausgangssignal der Ausrichtschaltung empfängt, um die Verstärkung des Verstärkers mit variabler Verstärkung zu steuern, wobei diese Schleife einen Videosignal-Spitzenwertdetektor (28), gefolgt von einem Differenzverstärker (20) enthält, wovon ein Eingang auf einem oberen Spanungsbezugswert (V2) liegt.

3. Schaltung nach Anspruch 2, dadurch gekennzeichnet, dass die Schaltung zum Ausrichten auf den unteren Pegel (26) und der Spitzenwertdetektor (28) der Kontrast-Dehnungsschaltung (14) derart gesteuert sind, dass sie nur auf die während des Fensters vorhandenen Videosignalpegel einwirken.

4. Schaltung nach einem der Ansprüche 1 bis 3, dadurch gekennzeichnet, dass der Fenstergenerator geeignet ist, ein Fenster unterschiedlicher Abmessungen und Lagen zu erzeugen.

5. Schaltung nach einem der Ansprüche 1 bis 4, dadurch gekennzeichnet, dass die unteren und oberen Referenzspannungen (V1, V2) individuell für die zwei Dehnungsschaltungen (10 und 14) einstellbar sind.

6. Schaltung nach einem der Ansprüche 1 bis 5, dadurch gekennzeichnet, dass der Schaltkreis (12) Signaleinblendungs- und/oder Unterdrückungseingänge aufweist und geeignet ist, um zu ihrem Ausgang entweder das durch die komplementäre Dehnugsschaltung (10) (ausserhalb des Fensters) bearbeitete Videosignal oder das durch die Dehnungsschaltung (14) bearbeitete Videosignal (während des Fensters) oder aber Einblend- oder Unterdrückungssignale (ausserhalb des Fensters oder während des Fensters) zu lenken.

7. Schaltung nach Anspruch 1, dadurch gekennzeichnet, dass die genannte Kontrast-Dehnungsschaltung (14) das Videosignal nach seinem Durchlaufen der komplementären Dehnungsschaltung (10) empfängt.

## Claims

1. Video signal processing circuit comprising an automatic contrast expansion circuit (14) receiving the video signal and having the function of expanding its amplitude and aligning it between a predetermined lower reference voltage and upper reference voltage, a window generator (16) producing a window signal (F), a switching circuit (12) controlled by the window generator (16) for directing to the output of the processing circuit on the one hand the video signal processed by the expanding circuit during the time intervals corresponding to the window and on the other hand the video signal during the remaining time intervals of the image, i.e. outside the window, characterized in that the expanding circuit (14) is also controlled by the window generator for aligning the darkest point of the window with the lower reference voltage and the brightest point of the window with the upper reference voltage, and that it includes a complementary automatic contrast expanding circuit (10) receiving said video signal and having the same function as the first but relatively to the entirety of the image, the switching circuit directing to said output of said processing circuit the video signal processed by the complementary circuit during said time intervals outside the window.

2. Circuit according to claim 1, characterized in that each expanding circuit comprises a variable gain amplifier (18) receiving the video signal (SV), and a circuit (26) for alignment with the lower voltage level (VI) downstream of the variable gain amplifier, a feedback loop receiving the output of the alignment circuit for controlling the gain of the variable gain amplifier, said loop including a video signal crest detector (28) followed by a differential amplifier (20) of which an input is at an upper voltage reference value (V2).

3. Circuit according to claim 2, characterized in that the circuit for alignment with the lower level (27) and the crest detector (28) of the contrast expanding circuit (14) are controlled so that they act only on the video signal levels present during the window.

4. Circuit according to any one of claims 1 to 3, characterized in that the window generator is capable of producing a window of variable dimensions and positions.

5. Circuit according to any one of claims 1 to 4, characterized in that the lower and upper reference voltages (V1, V2) are individually adjustable for the two expanding circuits (10 and 14).

6. Circuit according to any one of claims 1 to 5, characterized in that the switching circuit (12) comprises signal fade-in and/or blanking inputs and is capable of directing to its output either the video signal processed by the complementary expanding circuit (10) (outside the window) or the video signal processed by the expanding circuit (14) (during the window) or fade-in or blanking signals (outside the window or during the window).

7. Circuit according to claim 1, characterized in that said contrast expanding circuit (14) receives the video signal after the passage thereof through the complementary expanding circuit (10).

Fig. 1a

Fig.1b

Fig.1c

Fig.2

Fig.3

Fig.4

Fig.5

Fig.6